# EUROPEAN PATENT SPECIFICATION

(11) **EP 3 817 305 B1**
(45) Date of publication and mention of the grant of the patent: **24.01.2024**
(21) Application number: 19206889.8
(22) Date of filing: 04.11.2019
(51) Int. Cl.: H04L 45/24, H04L 69/163, H04L 47/19, H04L 67/14, H04W 40/02, H04W 72/12, H04W 74/02

(54) **ROUTE AND INTERFACE SELECTION TECHNIQUES FOR MULTI-CONNECTIVITY NETWORK PROTOCOLS**
ROUTEN- UND SCHNITTSTELLENAUSWAHLTECHNIKEN FÜR NETZWERKPROTOKOLLE MIT MULTIKONNEKTIVITÄT
TECHNIQUES DE SÉLECTION D'ITINÉRAIRES ET D'INTERFACES POUR DES PROTOCOLES DE RÉSEAUX À CONNECTIVITÉ MULTIPLE

(43) Date of publication of application: 05.05.2021
(73) Proprietor: Deutsche Telekom AG, 53113 Bonn (DE)
(72) Inventor: Amend, Markus, 63667 Nidda (DE); Bogenfeld, Eckard, 67316 Carlsberg (DE)
(74) Representative: Braun-Dullaeus Pannen Emmerling Patent- & Rechtsanwaltspartnerschaft mbB

(56) References cited:
- US-A1- 2013 279 331
- Olivier Bonaventure: "SOCKS and Multipath TCP - MPTCP", , 21 December 2018 (2018-12-21), XP055661430, Retrieved from the Internet: URL:http://blog.multipath-tcp.org/blog/htm l/2018/12/21/socks_and_multipath_tcp.html [retrieved on 2020-01-23]

## Description

### Field

The present disclosure relates to techniques for establishing a communication connection between two network entities, in particular between a first computer unit and a second computer unit, via different network flows. The disclosure further relates to methods and devices for robust connection establishment.

### Background

Hybrid Access (HA) combines at least two different network links with the same or different network technology; for example, it combines the access over a fixed network with the access over a cellular network.

A typical HA client has at least two access interfaces, one for example for Digital Subscriber Line (DSL) access and another one for access to the Long Term Evolution (LTE) network. Algorithms implemented on a processor of the Hybrid Access client are focused on a distributed client-server solution with client functionality in the residential gateway and server functionality (HA Server) in a data center at the network of an operator or in the public Internet. The Multipath Transmission Control Protocol (MPTCP) according to RFC 6824: "A. Ford, C. Raiciu, M. Handley, and O. Bonaventure, "TCP Extensions for Multipath Operation with Multiple Addresses," RFC, no. 6824, January 2013" can be applied for HA. MPTCP is a new proposed standard for a transport layer protocol as an extension to the regular Transmission Control Protocol (TCP). In the MPTCP technique typically two endpoints are connected by the MPTCP technique and network performance can enhanced by using multiple interfaces to maximize the overall data throughput, enhancing reliability, and capacity aggregation across several paths. Another multipath protocol offering these benefits is MP-QUIC according to "Quentin De Coninckn and Olivier Bonaventure, "Multipath Extensions for QUIC, draft-deconinck-quic-multipath-03, August 2019".

However, bundling HA networks with MPTCP faces a challenge from connectivity issues, should the primary chosen route fail to establish a connection to the desired endpoint. MPTCP relies by default on the network layer's routing functionality to make sure that it can build an initial subflow, to be in a position to exploit multiple routes to the same destination.

MPTCP enables making use of multiple interfaces and/or paths (IP addresses and port numbers) for a single connection. By default/design a TCP connection is bound by a four tuple of IP addresses and port numbers, implying that no more than one pair of IP addresses can be used at a time. When an application desires to communicate with a remote host using TCP as a transport layer protocol, it creates a socket, which is identified by a pair of IP addresses and a pair of port numbers. These pairs are unique that addition of any pairs to this communication is impossible. To overcome this limitation MPTCP was developed to allow TCP make use of multiple pairs of IP addresses and/or port numbers for a single communication, while keeping the application layer abstraction of single pairs.

This abstraction of single pair IP address and port numbers is achieved with the concept of initiating and establishing a first main TCP flow. This main flow is used as the single point of exchange between the application and TCP and enables data communication (switch connection in "established" mode). That is, MPTCP has added an extra layer of abstraction where it can aggregate different subflows as a single one, as if the data received from all subflows was received via the main flow only (from the application's point of view). This concept requires that this main flow needs to be created first while establishing additional connections. The main flow is referred to as "primary subflow", and any further addition of flows (called additional/subsequent subflows) to this connection should follow only after a successful establishment of this primary subflow.

To start a connection, MPTCP sends a TCP like SYN message that has an option to ask/offer MPTCP capability, called MP_CAPABLE. The receiver on the other hand has the option either to reply with an MP_CAPABLE SYN/ACK packet and form an MPTCP enabled connection or with a regular TCP SYN/ACK message telling the sender to fall back to a regular TCP connection. In the former scenario, the two connecting parties will exchange key strings from which a token will be generated to enable further flow establishment and securely join the pool of MPTCP subflows belonging to a single connection.

In other words, classes of multipath protocols like MPTCP and MP-QUIC require a first information exchange (handshake) over a single path before multipath communication can take place. Such a first communication usually takes place over one selected interface given by the so called default route or a specific route, provided by the respective Operation System in which the multi-connectivity network stack is integrated. In single path systems, which are equipped with several communication interfaces, the route serves to select the appropriate interface over others. The default route is a global setting, which is applied when no specific route, depending on source or destination address, cost metrics is given.

Hence, the initial selection of an interface becomes crucial if the multipath network protocol has no mechanism to overcome a possible communication loss during connection setup and stop communication, even if another functional route or interface is present.

EP 3 276 891 A1 teaches a solution that overcomes the problem of an initial route or initial interface selection by applying modifications of the multipath network protocol or its implementation. It is proposed to send the SYN message initially over multiple interfaces. However, many existing devices are not compatible with respect to those modifications of the multipath network protocol. US 2013/279331 A1 (PLUNTKE CHRISTOPHER DAVID [FI] ET AL) 24 October 2013 (2013-10-24) relates to multipath scheduling for a device with multiple interface.

Olivier Bonaventure: "SOCKS and Multipath TCP - MPTCP",, 21 December 2018 (2018-12-21), http://blog.multipath-tcp.org/blog/html/2018/12/21/ socks_and_multipath_tcp.html, relates to the use of multipath TCP with the SOCKS protocol.

### Summary

It is the object of the invention to provide methods and/or devices for facilitating a robust connection establishment in a hybrid access scenario, which is easy to implement, in particular independent of network protocol modifications.

The invention is defined by the independent claims. Further embodiments of the invention are defined by the dependent claims.

According to a first aspect, the invention relates to a method as defined in claim 1.

This provides the advantage that the initial communication interface and thereby the initial communication route is not based on the default route or the default communication interface, which is usually predefined by the operating system. A rigid adherence to the default communication interface does not take the actual situation of the communication environment into account. Nor is it necessary to change to modify multipath network protocols or its implementations within the network entities that take part in the communication in order to enhance the network performance of the first network entity.

The main idea is that a dedicated preselection of the communication interface, which takes the actual conditions of the communication environment between the network entities into account, enhances the likelihood of a successful first connection establishment. This is facilitated by the comparison between the measured condition values of different network flows to the entries of the condition matrix; the initial communication interface is selected as to provide the highest probability of guaranteeing a successful first communication establishment. The condition matrix lists possible communication environments parameter between the network entities. Basically, those communication environments can be pictured by every parameter that describes technical aspects of the communication between the network entities. The measured condition values need to be at least a subset of the entries of the condition matrix. For instance, the condition matrix is made of multiple lines, wherein each column specifies a certain combination of conditions. The comparison process then looks which line of the condition matrix matches to the measured condition values. If a match is found, it is possible to select one of the specific communication interfaces as the initial communication interface in order to increase the likelihood of successful first communication handshake between the network entities. The first communication handshake is followed by setting up further sub-connections. These sub-connections are merged into the multipath transmission according to the respective multipath protocol.

The invention can be applied on both sides of the multipath communication, which means it can be applied to both network entities. However, this might require transferring the respective measurement condition values or the condition matrix from one network entity to the other. This is especially the case, if the information is not local available.

In an embodiment, a second network flow is set up based on the successful first communication request. This provides the advantage that multipath communication is possible which enhances the overall performance of the communication between the first and the second network entity.

In an embodiment, the selection of the initial communication interface is based on a decision look-up table, which takes the condition matrix into account. As previously explained, each line of the condition matrix represents a specific combination of possible parameters that characterize the communication between the first and the second network entity. Therefore, the choice which specific communication interface shall be selected as being the initial communication interface can differ with each line. The decision look-up table specifies which specific communication interface is to be selected as being the initial communication interface with respect to each line of the condition matrix. In other words, the decision look-up describes the "effect".

The decision look-up table can be created with an algorithm that calculates which of the specific communication interfaces has the highest probability of a successful communication establishment. To enable this calculation, the algorithm is implemented with properties, in particular failure probabilities, of the different network flows and other parameters concerning the communication environment. Hence, it is possible to estimate which specific communication interface is the most likely to succeed in case of each line of the condition matrix. Therefore, the decision look-up table has as many lines as the condition matrix.

In an embodiment, the decision look-up table is dynamically updated based on feedback relating to successful creation of the first network flow. If e.g. new technologies get into the technical field or if certain network flows are for example in certain regions not as good as in other regions, the decision look-up table can incorporate this feedback or those new information to create updated decision look-up tables. In particular, default decision look-up tables can be stored in the network entities at delivery but those decision look-up tables can adapt dynamically in each of those network entities taking their special technical circumstances into account.

In an implementation form, the condition matrix comprises entries of an access technology of the first network entity. The access technology is differentiated for mobile interfaces, cellular interfaces, fixed interfaces and Wi-Fi interfaces, which might be the case in smartphones, CPEs (Customer Premises Equipment) or other devices. The mobile access technology can be further differentiated by the following cellular mobile communication standards: 2G, 3G, 4G, 5G and can be further extended. The Wi-Fi access technology can be further differentiated by the following Wi-Fi standards: Wi-Fi 1, 2, 3, 4, 5, 6 and can be further extended. The fixed access can be further separated by copper and FTTH technology and the individual speeds negotiated. Each of the different mobile and Wi-Fi interfaces and the associated network flows can be described by individual probabilities characterizing the likelihood of an successful first communication establishment.

This provides the advantage that those individual properties can be implemented in the algorithm when calculating the decision look-up table. For example, if a 4G mobile communication interface is associated with a higher likelihood of succeeding to establish a first communication than a Wi-Fi interface, then a smartphone which can communicate with both of these interfaces will select the 4G mobile communication interface as the initial communication interface.

In an embodiment, the condition matrix comprises entries of an access state of the access technology.

This provides the advantage that the actual condition of the different access technologies can be taken into account. It might be the case that the 4G mobile communication interface has in principle a higher likelihood of succeeding to establish a first communication than a Wi-Fi interface, but that the actual condition of the 4G mobile communication interface is worse so that this fact should also be considered. The most simple case is to differentiate if the communication interface is switched On or Off. Of course, if the 4G mobile communication interface is switched Off, then the Wi-Fi interface will be the better choice for the initial communication interface. In addition, the signal strength, for example layer 1/2 base connection estimation, RSSI (Received Signal Strength Indicator), RSRP (Reference Signal Received Power), RSRQ (Reference Signal Received Quality) or SINR (signal to interference plus noise ratio), can be taken into account. All those different conditions can be measured as the measuring condition values.

In an embodiment, the condition matrix comprises entries of a special communication environment of the first network entity. The special communication environment comprise:
- Basic service sets (BSSs): An infrastructure mode wireless network basic service set (BSS) consists of one redistribution point - typically an access point (WAP or AP) - together with one or more "client" stations that are associated with (i.e. connected to) that redistribution point. The operating parameters of the infrastructure-BSS are defined by the redistribution point. Stations communicate only with the redistribution point that they are associated with, and all traffic within the infrastructure-BSS is routed through/bridged by that redistribution point.
- Service set ID (SSID): The SSID is broadcast by stations in beacon packets to announce the presence of a network.
- Extended service sets (ESSs): An extended service set (ESS) is a set of one or more infrastructure basic service sets on a common logical network segment (i.e. same IP subnet and VLAN). Key to the concept is that the participating basic service sets appear as a single network to the logical link control layer. Thus, from the perspective of the logical link control layer, stations within an ESS may communicate with one another, and mobile stations may move transparently from one participating BSS to another (within the same ESS). Extended service sets make possible distribution services such as centralized authentication and seamless roaming between infrastructure-BSSs. From the perspective of the link layer, all stations within an ESS are all on the same link, and transfer from one BSS to another is transparent to logical link control.
- Location environment: The location environment can be assessed by using GPS data of the network entity, in particular of the smartphone.
- @Home environment: This environment characterizes communication parameters at the user's home.
- Authentication information.

All those different conditions can also be measured as measuring condition values.

This provides the advantage that further information is accessible, which influences the generation and the validity of the decision look-up table. For example, the information that the coverage of mobile network "flows" in certain regions is better or worse than any other regions can be taken into account.

In an embodiment, the condition matrix comprises entries of an energy status of the first network entity. Possible energy status situations are if the network entity is in a sleep mode or if the screen of the device is switched On or Off. If the screen of the device is switched Off, than it is assumed that the user is not using the device actively. In those cases, a smartphone or a computer will at most update certain apps in the background. Because the failure of initial communication establishment does not disturb the quality of experience for the user as much as if he is actively using the device, the choice for the initial communication interface can be set as to save resources of the local and all the global communication system. This means that in the above example, the initial communication interface can be the Wi-Fi interface even if it has a lower probability for the successful first communication handshake.

In an implementation form, the initial communication interface is selected to be a physical interface or a virtual interface. In particular, the virtual interface is beneficial to guide or terminate the different network flows into a central network unit within the core network of the network provider. In this central network unit further actions can be performed by the network provider on the network flows. For the case of two different network flows of a smartphone, which are commonly a mobile network flow and a Wi-Fi network flow, it follows a total of four different kinds of physical interfaces. Namely, a virtual mobile interface, a virtual Wi-Fi interface, the physical mobile interface, and a physical Wi-Fi interface. The virtual interfaces can be technically realized in a VPN environment.

In an embodiment, the virtual interface tunnels the network flows into a converter device to bundle multiple network flows to a single network flow. This provides the advantage that all the devices and/or network entities following the converter device need not to be capable of multi-connectivity data transfer. Those devices receive only one network flow that exits the converter device. If some of those network entities behind the converter device are capable of multi-connectivity, the bundled network flow can be separated into different network flows once again.

In an embodiment, the condition matrix is dynamically updated based on new combinations of conditions characterizing a communication environment between the first and the second network entity. This provides the advantage that the condition matrix can be adapted to new technical circumstances or developments.

According to a second aspect, the invention relates to a first network entity that is configured for establishing a communication connection to a second network entity via at least two different network flows according to the method described above, wherein the first network entity comprises: At least two different communication interfaces, wherein each of the communication interfaces is assigned to a specific communication interface to a network flow, wherein each of the communication interfaces is configured to set up an initial network flow; a memory unit configured to store a condition matrix and measurement condition values, wherein the condition matrix lists possible communication environments of the network entities and the measurement condition values lists actual measured condition values of the communication environments of the network entities; a processor configured to compare the measurement condition values to the entries of the condition matrix, wherein the processor is configured to select one of the specific communication interfaces as an initial communication interface, and wherein the initial communication interface is configured to transmit a first communication request directed to the second network entity.

Such a first network entity provides the advantage that the initial communication interface is dynamically selected due to certain conditions, in particular conditions of the communication environment, so that the likelihood is increased that a first communication handshake between the network entities is successful in order to enable subsequent multi-connectivity procedures/protocols.

In an embodiment, the first network entity comprises a measuring unit that is configured to measure the conditions of the different network flows. This provides the advantage that the network entity, for instance a smart phone, can measure the measurement conditions value independently on its own. In the following, this is called an internal measurement. This can cover technical measurements that depend on the state of the network entity that cannot be measured by external measurement units.

In an embodiment, the communication interfaces of the network entity are configured to receive the measured condition values which are measured by a remote measuring unit associated to the first network entity. This provides the advantage that the network entity has access to measurement condition values which would be otherwise not accessible. In the following, this is called an external measurement.

In an embodiment, the external and the internal measurement can be combined to obtain the maximum number of measurement condition values.

Further embodiments of the invention will be described with respect to the following figures, in which:

### BRIEF DESCRIPTION OF THE DRAWINGS

Fig. 1: shows a multipath communication system with a network entity according to the invention.
Fig. 2: shows an exemplary condition matrix according to the invention.
Fig. 3: shows an exemplary decision lookup table according to the invention.
Fig. 4: shows a converter device that bundles virtual network flows.

### DETAILED DESCRIPTION

In the following detailed description, reference is made to the accompanying drawings, which form a part thereof, and in which is shown by way of illustration specific aspects in which the disclosure may be practiced. It is understood that other aspects may be utilized and structural or logical changes may be made as long as they do not depart from the scope of the invention as it is depicted by the appended claims. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

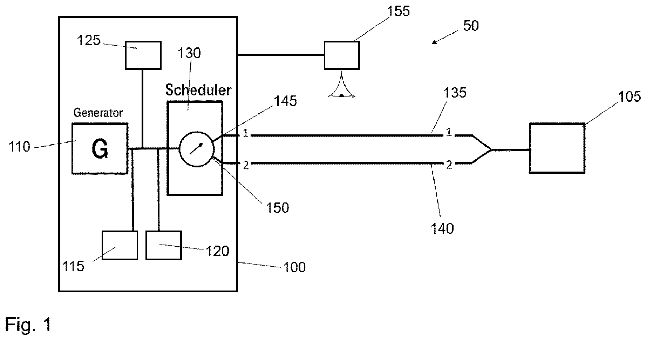

Fig. 1 shows a multipath communication system 50 with a first network entity 100.

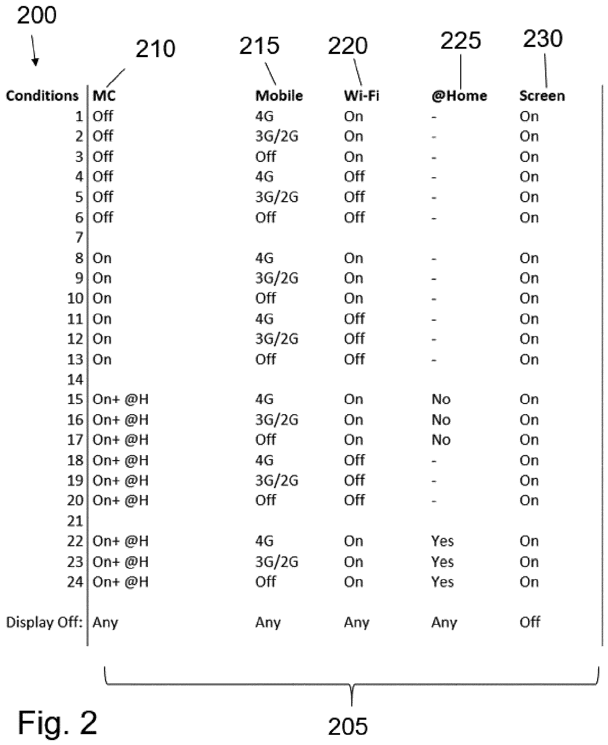

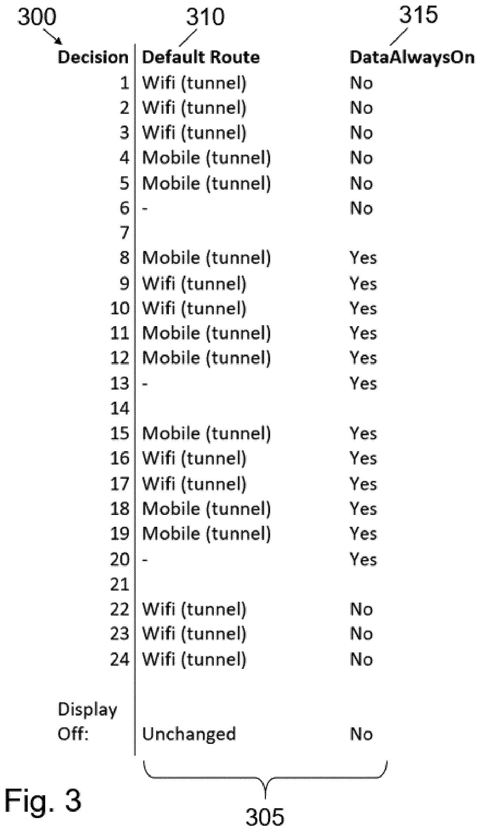

The first network entity 100 comprises a generator 110 that is configured to generate the data traffic, a processor 115 configured to perform calculations and to execute algorithms, and a memory unit 120 to which the processor 115 has access and which is configured to store the condition matrix of Fig. 2 and the decision look-up table of Fig. 3. The first network entity 100 further comprises an internal measuring unit 125 and a scheduler 130 that is configured to schedule the generated data stream of two different network flows 135, 140 by using communication interfaces 145, 150. Within the meaning of Fig.1, there is a mobile network flow 135, which is associated to a mobile communication interface 145 and a Wi-Fi network flow 140, which is associated to the Wi-Fi communication interface 150.

A remote measuring unit 155 is associated to the first network entity 100 and delivers measured condition values that can be stored in the memory unit 120 along with the measuring condition values that are measured by the internal measuring unit 125. The internal measuring unit 125 has access to properties of the first network entity 100 like if its screen is turned On or Off or if the first network entity 100, which can be a smart phone 100, is in a sleep mode or if one of the internal communication interfaces 145 or 150 is malfunctioning. On the other hand, the remote measuring unit 155 has access to properties of the global communication network. It can obtain information about signal strength, the overall condition of the network and/or if some base stations are malfunctioning. Of course, many more properties of the first network entity 100 and the communication system can be measured.

In Fig. 1 the first communication entity 100 builds up a multi-connectivity connection to a second network entity 105. In order to successfully build up such a multi-connectivity connection a first communication handshake over one of the network flows 135, 140 is necessary. To increase the likelihood of a successful first communication handshake, an algorithm implemented on the processor 115 uses the information of the condition matrix 200 and the decision look-up table 300 to select one of the communication interfaces 145, 150 as the initial communication interface to establish a first communication to the second network entity 105 to perform the necessary "handshake" between the network entities 100, 105.

Fig. 2 shows an exemplary condition matrix 200 of the invention. The columns 205 of the condition matrix represent different properties of the first network entity 100 that can be measured by the measuring units 125, 155 or can be assessed otherwise. The column "MC" 210 indicates the multi-connectivity status, the column "Mobile" 215 indicates the status of the mobile communication interface 145, column "Wi-Fi" 220 indicates the status of the Wi-Fi communication interface 150, the column "@Home" 225 indicates if the first network entity 100 is connected to a special environment, in particular a home environment of the user, and the column "Screen" 230 indicates the status of the screen of the first network entity 100.

Each line of the condition matrix 200 represents a different combination of those properties mentioned above. For example, from line 1 to line 6 the multi-connectivity of the first network entity 100 is deactivated, from line 8 to line 13 the multi-connectivity of the first network entity 100 is activated, from line 15 to line 24 the multi-connectivity of the first network entity 100 is activated and an additional detecting feature of the internal measuring unit 125 is turned on. "On+@H" means that the internal measuring unit is configured to detect if the first network entity is connected to a special environment @Home.

The line "Display off" means that any of the cases from lines 1 to 24 of the condition matrix 200 shall be "duplicated" but with the entry "Screen" 230: Off. This kind of representation serves only the purpose to make the condition matrix 200 more compact.

The empty lines of the condition matrix 200 simply serve the purpose to enhance the clarity of the graphical the presentation.

The measuring units 125, 155 measure the condition values of the first network entity, wherein the algorithm searches for a match of these measured condition values within the condition matrix 200.

Fig. 3 shows the exemplary decision look-up table 300 that serves as the basis for the decision of the algorithm which communication interface 145, 150 shall be selected as the initial communication interface.

The columns 305 of the decision look-up table 300 are:
- "Default Route" 310, which indicates if the mobile communication interface 145 or the Wi-Fi communication interface 150 shall be selected as the initial communication interface in order to establish the first communication handshake via the mobile or the Wi-Fi route. Wifi(tunnel) and Mobile(tunnel) means that virtual interfaces shall be used to establish a virtual terminal connection instead of physical interfaces Wifi(phys) and Mobile(phys);
- "DataAlwaysOn" 315, which indicates the decision if both the mobile and Wi-Fi interfaces 145, 150 shall be simultaneously activated. To save resources it might be sensible to switch the communication interface off, which is not selected as being the initial communication interface.

The number of lines decision look-up table 300 is identical to the number of lines of the condition matrix 200.

Some exemplary cases shall be discussed in the following:
i)
   Assume the measured condition values are: MC 210: Off; Mobile 215: 4G ; Wi-Fi 220: On; @Home 225: - ; Screen 230: ON;
   For these measured condition values, the algorithm finds a match in line 1 of the condition matrix 200. Since MC 210 is "Off" and Wi-Fi 220 is "On" it follows that mobile communication interface 145 is deactivated. The corresponding line 1 of the decision look-up table 300 instructs the algorithm to use the Wi-Fi communication interface 150 for setting up the initial communication handshake. DataAlwaysOn 315 is set to "No".
ii)
   Assume the measured condition values are: MC 210: Off; Mobile 215: 4G ; Wi-Fi 220: Off; @Home 225: - ; Screen 230: ON;
   For these measured condition values, the algorithm finds a match in line 4 of the condition matrix 200. Since MC 210 is "Off" and Wi-Fi 220 is "Off' it follows that the mobile communication interface 145 is activated. The corresponding line 4 of the decision look-up table 300 instructs the algorithm to use the mobile communication interface 145 for setting up the initial communication handshake. DataAlwaysOn 315 is set to "No".
iii)
   Assume the measured condition values are: MC 210: On; Mobile 215: 4G; Wi-Fi 220: On; @Home 225: - ; Screen 230: ON;
   For these measured condition values, the algorithm finds a match in line 8 of the condition matrix 200. Since MC 210 is "On" and Wi-Fi 220 is "On" it follows that both communication interfaces 145, 150 are activated. The corresponding line 8 of the decision look-up table 300 instructs the algorithm to use the mobile communication interface 145 for setting up the initial communication handshake since it is assumed that the mobile network flow 135 is in case of "4G" more likely to succeed in establishing the first communication handshake. DataAlwaysOn 315 is set to "Yes".
iv)
   Assume the measured condition values are: MC 210: On; Mobile 215: 3G/2G ; Wi-Fi 220: On; @Home 225: - ; Screen 230: ON;
   For these measured condition values, the algorithm finds a match in line 9 of the condition matrix 200. Since MC 210 is "On" and Wi-Fi 220 is "On" it follows that both communication interfaces 145, 150 are activated. The corresponding line 9 of the decision look-up table 300 instructs the algorithm to use the Wi-Fi communication interface 150 for setting up the initial communication handshake since it is assumed that the Wi-Fi network flow 140 is in case of "3G/2G" more likely to succeed in establishing the first communication handshake. DataAlwaysOn 315 is set to "Yes".
v)
   Assume the measured condition values are: MC 210: On+@H; Mobile 215: 4G; Wi-Fi 220: On; @Home 225: Yes; Screen 230: ON;
   For these measured condition values, the algorithm finds a match in line 22 of the condition matrix 200. Since MC 210 is "On+@H" the network entity tries to detect if it is connected to the special environment "@Home". Wi-Fi 220 is "On" so it follows that both communication interfaces 145, 150 are activated. The corresponding line 22 of the decision look-up table 300 instructs the algorithm to use the Wi-Fi communication interface 150 for setting up the initial communication handshake since it is assumed that the Wi-Fi network flow 140 in the special environment @Home is of a higher quality than "normal" Wi-Fi network flows 140. DataAlwaysOn 315 is set to "No".
vi) For the cases Screen 230 "Off", the decision look-up table 300 instructs the algorithm to make the same decision for the initial communication interfaces as above but always to set DataAlwaysOn 315 to "No".

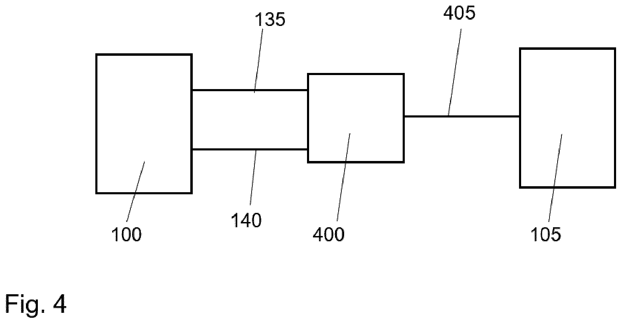

Fig. 4 shows a converter device 400 that bundles the virtual mobile network flow 135 and the virtual Wi-Fi network flow 140 to a single network flow 405, which is delivered to the second network entity 105. The virtual network flows 135 and 140 terminate in the converter device. The bundling to a single network flow 405 makes it possible that the first network entity 100 is able to communicate even if the second network entity 105 is not able to communicate via multiple network flows.

## Claims

1. A method for establishing a multi-connectivity communication between a first network entity and a second network entity of a communication system via at least two different network flows, the method comprising the following steps executed by the first entity:
assigning a specific communication interface (145, 150) to each of the different network flows (135, 140) of the first network entity;, wherein the two different network flows use two different communication interfaces (145, 150);
measuring condition values of each of the different network flows by a measuring unit (125) of the first network entity (100) or by a measuring entity (155) connected to the first network entity (100);
comparing the measured condition values of the different network flows (135, 140) to entries of a condition matrix (200), the condition matrix (200) being stored in a memory unit (120) of the first network entity (100), wherein the condition matrix (200) lists possible communication environments of the network entities (100, 105);
selecting one of the specific communication interface (145, 150) as an initial communication interface based on the comparison of the measured condition values of the different network flows to the entries of the condition matrix (200), wherein the measurement condition values list actual measured condition values of the communication environments of network entities;
transmitting a first communication request by the first network entity (100) directed to the second network entity (105) via the initial communication interface; and
setting up a first network flow between the first network entity and the second network entity based on the first communication request,
wherein selecting the initial communication interface is based on a decision look-up table (300), which takes the condition matrix into account (200),
wherein the condition matrix (200) comprises entries of an energy status of the first network entity (100),
wherein the energy status comprises if the network entity is in a sleep mode or if the screen of the first network entity (100) is switched On or Off,
wherein the internal measuring unit (125) has access to the property of the first network entity (100) if its screen is turned On or Off or if the first network entity (100) is an the sleep mode, wherein in response to determine that the screen of the first network entity (100) is switched Off or the first network entity is in the sleep mode the initial communication interface is selected as to save resources of the communication system even if it has a lower probability for the successful first communication handshake than a normally selected initial communication interface; wherein normally the selected initial communication interface is selected as to provide the highest probability of guaranteeing the successful first communication establishment.

2. The method of claim 1, comprising
setting up a second network flow based on a successful first communication request.

3. The method of claim 2, comprising
creating the decision look-up table (300) with an algorithm that calculates the specific communication interface with the highest probability of a successful communication establishment.

4. The method of claim 2 to 3, comprising
dynamically updating the decision look-up table (300) based on feedback relating to successful creation of the first network flow.

5. The method of one of the preceding claims, wherein the condition matrix (200) comprises entries of an access technology of the first network entity (100).

6. The method of claim 6, wherein the condition matrix (200) comprises entries of an access state of the access technology.

7. The method of one of the preceding claims, comprising:
selection of a physical interface or a virtual interface as the initial communication interface.

8. The method of claim 7, wherein the virtual interface tunnels the network flows into a converter device (400) to bundle multiple network flows to a single network flow (405).

9. The method of one of the preceding claims, comprising
dynamically updating the condition matrix (200) based on new combinations of conditions characterizing a communication environment between the first and the second network entity (100, 105).

10. A first network entity configured for establishing a communication connection to a second network entity of a communication system via at least two different network flows according to a method of one the claims 1 to 9, the first network entity comprising:
at least two different communication interfaces (145, 150), wherein each of the communication interfaces (145, 150) is assigned to a specific communication interface to a network flow, wherein each of the communication interfaces is configured to set up an initial network flow;
a memory unit (120) configured to store a condition matrix (200) and measurement condition values, wherein the condition matrix (200) lists possible communication environments of the network entities (100, 105) and the measurement condition values lists actual measured condition values of the communication environments of the network entities;
a processor (115) configured to compare the measurement condition values to the entries of the condition matrix (200), wherein the processor (115) is configured to select one of the specific communication interfaces (145, 150) as an initial communication interface, and wherein the initial communication interface is configured to transmit a first communication request directed to the second network entity (105).

11. The network entity of claim 10, wherein the first network entity (100) comprises a measuring unit (120) that is configured to measure the conditions values of the different network flows (135, 140).

12. The network entity of claim 10 to 11, wherein the communication interfaces are configured to receive the measurement conditions values, which are measured by a remote measuring unit (155) associated to the first and/or the second network entity (100, 105).

## Patentansprüche

1. Verfahren zum Aufbauen einer Multi-Konnektivitäts-Kommunikation zwischen einer ersten Netzwerkentität und einer zweiten Netzwerkentität eines Kommunikationssystems über mindestens zwei verschiedene Netzwerkflüsse, wobei das Verfahren die folgenden Schritte umfasst, die von der ersten Entität ausgeführt werden:
Zuweisen einer spezifischen Kommunikationsschnittstelle (145, 150) an jeden der verschiedenen Netzwerkflüsse (135, 140) der ersten Netzwerkentität; wobei die zwei verschiedenen Netzwerkflüsse zwei verschiedene Kommunikationsschnittstellen (145, 150) verwenden;
Messen von Zustandswerten jedes der verschiedenen Netzwerkflüsse durch eine Messeinheit (125) der ersten Netzwerkentität (100) oder durch eine Messentität (155), die mit der ersten Netzwerkentität (100) verbunden ist;
Vergleichen der gemessenen Zustandswerte der verschiedenen Netzwerkflüsse (135, 140) mit Einträgen einer Zustandsmatrix (200), wobei die Zustandsmatrix (200) in einer Speichereinheit (120) der ersten Netzwerkentität (100) gespeichert ist, wobei die Zustandsmatrix (200) mögliche Kommunikationsumgebungen der Netzwerkentitäten (100, 105) auflistet;
Auswählen einer der spezifischen Kommunikationsschnittstellen (145, 150) als eine anfängliche Kommunikationsschnittstelle basierend auf dem Vergleich der gemessenen Zustandswerte der verschiedenen Netzwerkflüsse mit den Einträgen der Zustandsmatrix (200), wobei die gemessenen Zustandswerte tatsächliche gemessene Zustandswerte der Kommunikationsumgebungen von Netzwerkentitäten auflisten;
Übertragen einer an die zweite Netzwerkentität (105) gerichteten ersten Kommunikationsanforderung durch die erste Netzwerkentität (100) über die anfängliche Kommunikationsschnittstelle; und
Einrichten eines ersten Netzwerkflusses zwischen der ersten Netzwerkentität und der zweiten Netzwerkentität basierend auf der ersten Kommunikationsanforderung,
wobei das Auswählen der anfänglichen Kommunikationsschnittstelle auf einer Entscheidungsnachschlagetabelle (300) basiert, die die Zustandsmatrix (200) berücksichtigt, wobei die Zustandsmatrix (200) Einträge eines Energiestatus der ersten Netzwerkentität (100) umfasst,
wobei der Energiestatus umfasst, ob sich die Netzwerkentität in einem Schlafmodus befindet oder ob der Bildschirm der ersten Netzwerkentität (100) ein- oder ausgeschaltet ist,
wobei die interne Messeinheit (125) Zugriff auf die Eigenschaft der ersten Netzwerkentität (100) hat, ob ihr Bildschirm ein- oder ausgeschaltet ist oder wenn sich die erste Netzwerkentität (100) in einem Schlafmodus befindet, wobei als Reaktion auf das Bestimmen, dass der Bildschirm der ersten Netzwerkentität (100) ausgeschaltet ist oder sich die erste Netzwerkentität im Schlafmodus befindet, die anfängliche Kommunikationsschnittstelle derart ausgewählt wird, dass Ressourcen des Kommunikationssystems gespart werden, auch wenn die solchermaßen ausgewählte anfängliche Kommunikationsschnittstelle eine geringere Wahrscheinlichkeit für einen erfolgreichen ersten Kommunikationshandshake aufweist als eine normalerweise ausgewählte anfängliche Kommunikationsschnittstelle;
wobei die normalerweise ausgewählte anfängliche Kommunikationsschnittstelle derart ausgewählt, dass Wahrscheinlichkeit für das Garantieren eines erfolgreichen ersten Kommunikationsaufbaus am größten ist.

2. Verfahren nach Anspruch 1, umfassend
Einrichten eines zweiten Netzwerkflusses basierend auf einer erfolgreichen ersten Kommunikationsanforderung.

3. Verfahren nach Anspruch 2, umfassend
Erstellen der Entscheidungsnachschlagetabelle (300) mit einem Algorithmus, der die spezifische Kommunikationsschnittstelle mit der höchsten Wahrscheinlichkeit für einen erfolgreichen Kommunikationsaufbau berechnet.

4. Verfahren nach Anspruch 2 bis 3, umfassend
dynamisches Aktualisieren der Entscheidungsnachschlagetabelle (300) basierend auf einer Rückmeldung bezüglich einer erfolgreichen Erstellung des ersten Netzwerkflusses.

5. Verfahren nach einem der vorhergehenden Ansprüche, wobei die Zustandsmatrix (200) Einträge einer Zugangstechnologie der ersten Netzwerkentität (100) umfasst.

6. Verfahren nach Anspruch 6, wobei die Zustandsmatrix (200) Einträge eines Zugangszustands der Zugangstechnologie umfasst.

7. Verfahren nach einem der vorhergehenden Ansprüche, umfassend:
Auswählen einer physikalischen Schnittstelle oder einer virtuellen Schnittstelle als die anfängliche Kommunikationsschnittstelle.

8. Verfahren nach Anspruch 7, wobei die virtuelle Schnittstelle die Netzwerkflüsse in eine Wandlervorrichtung (400) tunnelt, um mehrere Netzwerkflüsse zu einem einzelnen Netzwerkfluss (405) zu bündeln.

9. Verfahren nach einem der vorhergehenden Ansprüche, umfassend dynamisches Aktualisieren der Zustandsmatrix (200) basierend auf neuen Kombinationen von Zuständen, die eine Kommunikationsumgebung zwischen der ersten und der zweiten Netzwerkentität (100, 105) charakterisieren.

10. Erste Netzwerkentität, die zum Aufbauen einer Kommunikationsverbindung mit einer zweiten Netzwerkentität eines Kommunikationssystems über mindestens zwei verschiedene Netzwerkflüsse gemäß einem Verfahren nach einem der Ansprüche 1 bis 9 eingerichtet ist, wobei die erste Netzwerkentität aufweist:
mindestens zwei verschiedene Kommunikationsschnittstellen (145, 150), wobei jede der Kommunikationsschnittstellen (145, 150) einer spezifischen Kommunikationsschnittstelle zu einem Netzwerkfluss zugewiesen ist, wobei jede der Kommunikationsschnittstellen zum Einrichten eines anfänglichen Netzwerkflusses eingerichtet ist;
eine Speichereinheit (120), die zum Speichern einer Zustandsmatrix (200) und von gemessenen Zustandswerten eingerichtet ist, wobei die Zustandsmatrix (200) mögliche Kommunikationsumgebungen der Netzwerkentitäten (100, 105) auflistet und die gemessenen Zustandswerte tatsächliche gemessene Zustandswerte der Kommunikationsumgebungen der Netzwerkentitäten auflisten;
einen Prozessor (115), der zum Vergleichen der gemessenen Zustandswerte mit den Einträgen der Zustandsmatrix (200) eingerichtet ist, wobei der Prozessor (115) zum Auswählen einer der spezifischen Kommunikationsschnittstellen (145, 150) als eine anfängliche Kommunikationsschnittstelle eingerichtet ist, und wobei die anfängliche Kommunikationsschnittstelle zum Übertragen einer an die zweite Netzwerkentität (105) gerichteten ersten Kommunikationsanforderung eingerichtet ist.

11. Netzwerkentität nach Anspruch 10, wobei die erste Netzwerkentität (100) eine Messeinheit (120) umfasst, die zum Messen der Zustandswerte der verschiedenen Netzwerkflüsse (135, 140) eingerichtet ist.

12. Netzwerkentität nach Anspruch 10 bis 11, wobei die Kommunikationsschnittstellen zum Empfangen der gemessenen Zustandswerte eingerichtet sind, die von einer der ersten und/oder der zweiten Netzwerkentität (100, 105) zugeordneten entfernten Messeinheit (155) gemessen werden.

## Revendications

1. Procédé pour établir une communication multiconnectivité entre une première entité de réseau et une deuxième entité de réseau d'un système de communication via au moins deux flux de réseau différents, le procédé comprenant les étapes suivantes exécutées par la première entité :
attribuer une interface de communication spécifique (145, 150) à chacun des différents flux de réseau (135, 140) de la première entité de réseau ; dans lequel les deux flux de réseau différents utilisent deux interfaces de communication différentes (145, 150) ;
mesurer des valeurs de condition de chacun des différents flux de réseau par une unité de mesure (125) de la première entité de réseau (100) ou par une entité de mesure (155) connectée à la première entité de réseau (100) ;
comparer les valeurs de condition mesurées des différents flux de réseau (135, 140) avec les entrées d'une matrice de condition (200), la matrice de condition (200) étant mémorisée dans une unité de mémoire (120) de la première entité de réseau (100), dans lequel la matrice de condition (200) répertorie les environnements de communication possibles des entités de réseau (100, 105) ;
sélectionner une des interfaces de communication spécifiques (145, 150) comme interface de communication initiale sur la base de la comparaison des valeurs de condition mesurées des différents flux de réseau avec les entrées de la matrice de condition (200), dans lequel les valeurs de condition de mesure répertorient les valeurs de condition mesurées réelles des environnements de communication des entités de réseau ;
transmettre une première demande de communication par la première entité de réseau (100) adressée à la deuxième entité de réseau (105) via l'interface de communication initiale ; et
établir un premier flux de réseau entre la première entité de réseau et la deuxième entité de réseau sur la base de la première demande de communication,
dans lequel la sélection de l'interface de communication initiale est basée sur une table de consultation de décision (300), qui prend en compte la matrice de condition (200), dans lequel la matrice de condition (200) comprend des entrées d'un état énergétique de la première entité de réseau (100),
dans lequel l'état énergétique comprend si l'entité de réseau est en mode de veille ou si l'écran du la première entité de réseau (100) est allumée ou éteinte,
dans lequel l'unité de mesure interne (125) a accès à la propriété de la première entité de réseau (100) si son écran est allumé ou éteint ou si la première entité de réseau (100) est en mode de veille, dans lequel en réponse pour déterminer que l'écran de la première entité de réseau (100) est éteint ou la première entité de réseau est en mode de veille, l'interface de communication initiale est sélectionnée de manière à économiser les ressources du système de communication même si elle a une probabilité plus faible de réussite de la première communication Handshake qu'une interface de communication initiale normalement sélectionnée ; dans lequel normalement l'interface de communication initiale sélectionnée est sélectionnée de manière à fournir la probabilité la plus élevée de garantir le succès du premier établissement de communication.

2. Procédé selon la revendication 1, comprenant de :
établir un deuxième flux de réseau sur la base d'une première demande de communication réussie.

3. Procédé selon la revendication 2, comprenant de :
créer la table de consultation de décision (300) avec un algorithme qui calcule l'interface de communication spécifique ayant la probabilité la plus élevée d'un établissement de communication réussi.

4. Procédé selon la revendication 2 à 3, comprenant de :
mettre à jour dynamiquement la table de consultation de décision (300) sur la base d'un retour d'information relatif à la création réussie du premier flux de réseau.

5. Procédé selon une des revendications précédentes, dans lequel la matrice de condition (200) comprend des entrées d'une technologie d'accès de la première entité de réseau (100).

6. Procédé selon la revendication 6, dans lequel la matrice de condition (200) comprend des entrées d'un état d'accès de la technologie d'accès.

7. Procédé selon une des revendications précédentes, comprenant de :
sélectionner une interface physique ou une interface virtuelle comme interface de communication initiale.

8. Procédé selon la revendication 7, dans lequel l'interface virtuelle tunnelise les flux de réseau dans un dispositif convertisseur (400) pour regrouper plusieurs flux de réseau en un seul flux de réseau (405) .

9. Procédé selon une des revendications précédentes, comprenant la mise à jour dynamique de la matrice de condition (200) sur la base de nouvelles combinaisons de conditions caractérisant un environnement de communication entre la première et la deuxième entité de réseau (100, 105).

10. Première entité de réseau configurée pour établir une connexion de communication avec une deuxième entité de réseau d'un système de communication via au moins deux flux de réseau différents selon un procédé d'une des revendications 1 à 9, la première entité de réseau comprenant :
au moins deux interfaces de communication différentes (145, 150), chacune des interfaces de communication (145, 150) étant affectée à une interface de communication spécifique à un flux de réseau, chacune des interfaces de communication étant configurée pour établir un flux de réseau initial ;
une unité de mémoire (120) configurée pour mémoriser une matrice de conditions (200) et des valeurs de mesure de condition, dans lequel la matrice de condition (200) répertorie les environnements de communication possibles des entités de réseau (100, 105) et les valeurs de condition de mesure répertorient les valeurs de condition mesurées réelles des environnements de communication des entités de réseau ;
un processeur (115) configuré pour comparer les valeurs de condition de mesure avec les entrées de la matrice de condition (200), dans lequel le processeur (115) est configuré pour sélectionner une des interfaces de communication spécifiques (145, 150) comme interface de communication initiale, et dans lequel l'interface de communication initiale est configurée pour transmettre une première demande de communication dirigée vers la deuxième entité de réseau (105).

11. Entité de réseau selon la revendication 10, dans laquelle la première entité de réseau (100) comprend une unité de mesure (120) qui est configurée pour mesurer les valeurs de conditions des différents flux de réseau (135, 140).

12. Entité de réseau selon les revendications 10 à 11, dans laquelle les interfaces de communication sont configurées pour recevoir les valeurs des conditions de mesure, qui sont mesurées par une unité de mesure distante (155) associée à la première et/ou à la deuxième entité de réseau (100, 105).
